# EUROPÄISCHE PATENTSCHRIFT

(11) **EP 3 977 605 B1**
(45) Veröffentlichungstag und Bekanntmachung des Hinweises auf die Patenterteilung: **26.04.2023**
(21) Anmeldenummer: 20729710.2
(22) Anmeldetag: 28.05.2020
(51) Int. Cl.: H02K 41/03, B65G 54/02

(54) **TRANSPORTEINRICHTUNG**
TRANSPORT DEVICE
DISPOSITIF DE TRANSPORT

(30) Priorität: 28.05.2019 AT 504882019
(43) Veröffentlichungstag der Anmeldung: 06.04.2022
(73) Patentinhaber: B&R Industrial Automation GmbH, 5142 Eggelsberg (AT)
(72) Erfinder: HOLZLEITNER, Alois, 5280 Braunau am Inn (AT)
(74) Vertreter: Patentanwälte Pinter & Weiss OG
(86) Internationale Anmeldenummer: PCT/EP2020/064877
(87) Internationale Veröffentlichungsnummer: WO 2020/239930

(56) Entgegenhaltungen:
- WO-A1-2016/012171
- WO-A1-2016/118335
- DE-A1-102014 214 693
- DE-A1-102014 214 696
- DE-A1-102014 214 697
- DE-A1-102015 004 582
- DE-A1-102016 205 513

## Beschreibung

Die Erfindung betrifft eine Transporteinrichtung mit zumindest zwei Planarmotoren, die jeweils eine Transportebene ausbilden, in der zumindest eine Transporteinheit zweidimensional bewegbar ist, wobei die Transportebenen der zumindest zwei Planarmotoren aneinander angrenzen und in einem Angrenzungswinkel zueinander geneigt sind, der 90° beträgt, wobei an jedem Planarmotor Antriebsspulen vorgesehen sind, um mit Antriebsmagneten einer Transporteinheit elektromagnetisch zusammenzuwirken, um die Transporteinheit in der jeweiligen Transportebene zu bewegen, wobei an der Transporteinrichtung zumindest eine mehrfach wirkende Transporteinheit vorgesehen ist, wobei an der mehrfach wirkenden Transporteinheit zumindest erste Antriebsmagnete vorgesehen sind, um mit den Antriebsspulen eines ersten Planarmotors elektromagnetisch zusammenzuwirken und zumindest zweite Antriebsmagnete vorgesehen sind, um mit den Antriebsspulen eines zweiten Planarmotors elektromagnetisch zusammenzuwirken.

Weiters betrifft die Erfindung ein Verfahren zum Betreiben einer Transporteinrichtung mit zumindest zwei Planarmotoren mit aneinander angrenzenden und in einem Angrenzungswinkel von 90° relativ zueinander geneigten Transportebenen, wobei an den Planarmotoren vorgesehene Antriebsspulen von zumindest einer Planarmotor-Steuerungseinheit angesteuert werden, wobei an der Transporteinrichtung zumindest eine mehrfach wirkende Transporteinheit vorgesehen wird, wobei an der mehrfach wirkenden Transporteinheit zumindest erste Antriebsmagnete vorgesehen werden, um mit den Antriebsspulen eines ersten Planarmotors elektromagnetisch zusammenzuwirken und zumindest zweite Antriebsmagnete vorgesehen werden, um mit den Antriebsspulen eines zweiten Planarmotors elektromagnetisch zusammenzuwirken.

Planarmotoren sind grundsätzlich im Stand der Technik bekannt. Die US 9,202,719 B2 offenbart beispielsweise den grundlegenden Aufbau und die Funktionsweise eines solchen Planarmotors. Ein Planarmotor weist im Wesentlichen eine Transportebene auf, in der eine oder mehrere Transporteinheiten zweidimensional bewegt werden können. Dazu sind am Planarmotor in der Regel in der Transportebene verteilt Antriebsspulen vorgesehen, die von einer Steuerungseinheit angesteuert werden, um ein bewegtes Magnetfeld in die gewünschte Bewegungsrichtung zu erzeugen. An der Transporteinheit sind Antriebsmagnete (Permanentmagnete oder Elektromagnete) zweidimensional verteilt angeordnet, die mit dem Magnetfeld zusammenwirken, sodass eine Antriebskraft in die gewünschte Bewegungsrichtung auf die Transporteinheit ausgeübt wird. Die Antriebsspulen und die Antriebsmagnete sind dabei vorteilhafterweise so angeordnet, dass neben einer eindimensionalen Bewegung entlang der von der Transportebene aufgespannten Achsen auch komplexere zweidimensionale Bewegungen der Transporteinheit in der Transportebene möglich sind. Ein Planarmotor kann beispielsweise als Transporteinrichtung in einem Produktionsprozess genutzt werden, wobei sehr flexible Transportprozesse mit komplexen Bewegungsprofilen realisiert werden können.

In der EP 3 172 156 B1 und der EP 3 172 134 B1 sind beispielsweise solche Anwendungen eines Planarmotors als Transporteinrichtung gezeigt. Dabei sind z.B. zwei Planarmotoren aneinander angrenzend angeordnet und auf beiden Planarmotoren sind Transporteinheiten bewegbar. Dadurch ist eine voneinander unabhängige Bewegung von Transporteinheiten in zwei Ebenen möglich. In einer anderen Ausführung interagieren jeweils ein Planarmotor und ein oder mehrere Stetigförderer, um Produkte in bestimmter Weise zu manipulieren. Die Transporteinheiten des Planarmotors sind jeweils in einer vertikalen Ebene zweidimensional individuell bewegbar. Der Planarmotor ermöglicht damit zwar eine sehr flexible Bewegung in der vertikalen Ebene, allerdings ist man durch die Stetigförderer in der Flexibilität eingeschränkt.

WO 2018/176137 A1 offenbart eine Transporteinrichtung, die zwei beabstandete parallele Planarmotor-Statoren aufweisen kann, die jeweils eine Transportebene ausbilden, in welchen jeweils eine Transporteinheit bewegbar ist. Die Transporteinheiten können mit einem Verbindungskörper gelenkig verbunden sein, auf dem ein Objekt transportiert werden kann. Durch Relativbewegung der Transporteinheiten kann das Objekt in Richtung normal auf die Transportebenen bewegt werden. DE 195 31 520 A1 offenbart eine ähnliche Transporteinrichtung, wobei die Transporteinheiten in derselben Transportebene bewegbar sind.

WO 2016/118335 A1 offenbart eine Transporteinrichtung mit zwei normal aufeinander stehenden Statoren, die jeweils eine Transportebene ausbilden und mit einer Transporteinheit, die zwei rechtwinkelige Schenkel aufweist. An den Statoren sind jeweils Antriebsspulen angeordnet und an den Schenkeln der Transporteinheit sind Antriebsmagnete angeordnet, die mit den Antriebsspulen zusammenwirken.

Weitere Transporteinrichtungen in Form von Planarmotoren sind in DE 10 2016 224 951 A, WO 01/59409 A2 und WO 2016/012171 A1 offenbart.

Es ist deshalb eine Aufgabe der Erfindung, eine Transporteinrichtung mit mehreren Planarmotoren sowie ein Verfahren zum Betreiben einer solchen Transporteinrichtung anzugeben, die eine höhere Flexibilität in der Bewegung der Transporteinheiten ermöglichen.

Erfindungsgemäß wird die Aufgabe mit der eingangs genannten Transporteinrichtung gemäß Anspruch 1 dadurch gelöst, dass in der Transporteinrichtung zumindest ein weiterer Planarmotor vorgesehen ist, der eine Transportebene ausbildet, die direkt an die Transportebene des ersten Planarmotors angrenzt und normal darauf steht, wobei am zumindest einen weiteren Planarmotor Antriebsspulen vorgesehen sind, um mit Antriebsmagneten einer Transporteinheit elektromagnetisch zusammenzuwirken, um die Transporteinheit in der jeweiligen Transportebene zu bewegen und dass die mehrfach wirkende Transporteinheit in der Transportebene eines der Planarmotoren zweidimensional bewegbar ist oder zugleich in den angrenzenden Transportebenen von zumindest zwei Planarmotoren eindimensional bewegbar ist, wobei die zumindest eine mehrfach wirkende Transporteinheit von der Transportebene des zweiten Planarmotors über die Transportebene des ersten Planarmotors in die Transportebene des zumindest einen weiteren Planarmotors bewegbar ist. Damit sind sehr flexible und komplexe Bewegungsabläufe möglich, beispielsweise kann eine mehrfach wirkende Transporteinheit in herkömmlicher Weise in nur einer der angrenzenden Transportebenen bewegt werden. Eine mehrfach wirkende Transporteinheit kann aber zeitgleich eindimensional in beiden angrenzenden Transportebenen bewegt werden, beispielsweise um eine größere Antriebskraft erzeugen zu können. Besonders vorteilhaft ist weiters, dass auch eine Übergabe der mehrfach wirkenden Transporteinheit von einer Transportebene auf eine angrenzende Transportebene erfolgen kann.

Als mehrfach wirkende Transporteinheit ist vorzugsweise eine doppelt wirkende Transporteinheit vorgesehen, an der ein Grundkörper mit zwei Schenkeln vorgesehen ist, die in einem Winkel zueinander angeordnet sind, der dem Angrenzungswinkel zwischen zwei angrenzenden Transportebenen entspricht, wobei an einem Schenkel die ersten Antriebsmagnete angeordnet sind und am anderen Schenkel die zweiten Antriebsmagnete angeordnet sind.

Besonders vorteilhaft ist es, wenn die mehrfach wirkende Transporteinheit in zumindest zwei einfach wirkende Transporteinheiten entkoppelbar ist, wobei an den zumindest zwei einfach wirkenden Transporteinheiten jeweils zumindest eine Kopplungsvorrichtung vorgesehen ist, um die Transporteinheiten lösbar miteinander zu koppeln, um die mehrfach wirkende Transporteinheit auszubilden.

Je Planarmotor ist vorzugsweise zumindest eine Planarmotor-Steuerungseinheit zur Steuerung der Antriebsspulen des jeweiligen Planarmotors vorgesehen, wobei die Planarmotor-Steuerungseinheiten der zumindest zwei Planarmotoren verbunden sind, um Steuerungsinformationen zur Steuerung von Transporteinheiten des jeweiligen Planarmotors auszutauschen und/oder dass die Planarmotor-Steuerungseinheiten mit einer übergeordneten Transporteinrichtungs-Steuerungseinheit verbunden oder in diese integriert sind. Dadurch können die Steuerungsbefehle zwischen einzelnen Planarmotoren ausgetauscht und synchronisiert werden, um die Bewegungsprofile der Transporteinheiten aufeinander abzustimmen.

Vorzugsweise ist zumindest ein Planarmotor aus einer Mehrzahl von aneinander angrenzenden Transportsegmenten aufgebaut, die zusammen die Transportebene des Planarmotors ausbilden, wobei an jedem Transportsegment Antriebsspulen vorgesehen sind. Damit ist ein modularer Aufbau möglich, wodurch mit einem standardisierten Transportsegment Planarmotoren mit verschieden großen Transportebenen geschaffen werden können.

Es ist weiters vorteilhaft, wenn in der Transporteinrichtung zumindest zwei Planarmotoren mit einander zugewandten Transportebenen vorgesehen sind, wobei in der Transportebene eines der Planarmotoren zumindest eine Transporteinheit vorgesehen ist, die mit zumindest einer, in der Transportebene des zumindest einen anderen Planarmotors vorgesehenen Transporteinheit mittels einer Verbindungseinheit verbunden ist. Durch die Verbindung zweier oder mehrerer Transporteinheiten mittels einer Verbindungseinheit können durch eine Überlagerung der Bewegungsprofile der Transporteinheiten sehr komplexe Bewegungsmuster z.B. eines Punkts an der Verbindungseinheit ermöglicht werden. Beispielsweise kann als Verbindungseinheit ein starres oder flexibles Element verwendet werden. Es kann aber auch direkt ein zu bewegendes Objekt als Verbindungseinheit genutzt werden, beispielsweise eine flexible Folie oder ein Textiler Stoff der zwischen zwei oder mehreren Transporteinheiten angeordnet wird.

Vorzugsweise ist zwischen den einander zugewandten Transportebenen ein Anordnungswinkel vorgesehen, der maximal 45° beträgt, wobei der Anordnungswinkel vorzugsweise 0° beträgt, indem die Transportebenen gegenüberliegend und parallel zueinander angeordnet sind. Damit können die einander zugewandten Transportebenen relativ zueinander sehr variabel im Raum positioniert werden, wodurch die Transporteinrichtung sehr flexibel ausgestaltet werden kann.

Die Verbindungseinheit ist vorzugsweise verstellbar, um eine Verbindungseinheitslänge während der Bewegung der zumindest zwei Transporteinheiten an einen veränderlichen Abstand zwischen den zumindest zwei Transporteinheiten anzupassen. Dadurch wird ein höherer Freiheitsgrad in der Bewegung der verbundenen Transporteinheiten geschaffen. Weiters wird die Aufgabe mit dem eingangs genannten Verfahren gemäß Anspruch 9 dadurch gelöst, dass in der Transporteinrichtung zumindest ein weiterer Planarmotor vorgesehen wird, der eine Transportebene ausbildet, die direkt an die Transportebene des ersten Planarmotors angrenzt und normal darauf steht, wobei am zumindest einen weiteren Planarmotor vorgesehene Antriebsspulen von einer Planarmotor-Steuerungseinheit ansteuerbar sind und dass die zumindest eine mehrfach wirkende Transporteinheit in der Transportebene eines der Planarmotoren zweidimensional bewegt wird oder zugleich in den angrenzenden Transportebenen von zumindest zwei Planarmotoren eindimensional bewegt wird, indem die Antriebsspulen zumindest eines der Planarmotoren von der entsprechenden Planarmotor-Steuerungseinheit angesteuert werden, um mit den ersten oder zweiten Antriebsmagneten der mehrfach wirkenden Transporteinheit zur Erzeugung einer Vortriebskraft zusammenzuwirken.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1a-1c ein Beispiel einer erfindungsgemäßen Transporteinrichtung in einer Vorderansicht, einer Draufsicht und in einer Seitenansicht,
Fig.2 eine Anordnung von Antriebsspulen auf einem Transportsegment eines Planarmotors,
Fig.3a eine einfach wirkende Transporteinheit eines Planarmotors in einer Seitenansicht,
Fig.3b eine Anordnung von Antriebsmagneten auf einer einfach wirkenden Transporteinheit,
Fig.4 eine doppelt wirkende Transporteinheit eines Planarmotors in einer isometrischen Ansicht,
Fig.5 einen Kopplungsvorgang von Transporteinheiten anhand einer Seitenansicht einer Transporteinrichtung,
Fig.6 ein weiteres Beispiel einer erfindungsgemäßen Transporteinrichtung mit zwei mittels einer Verbindungseinheit verbundenen Transporteinheiten.

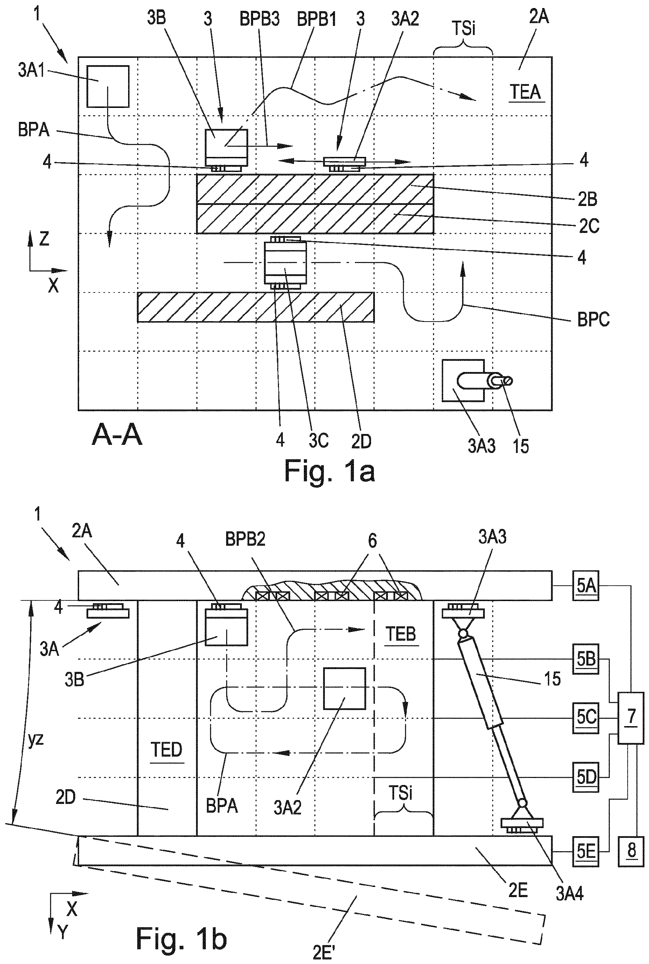

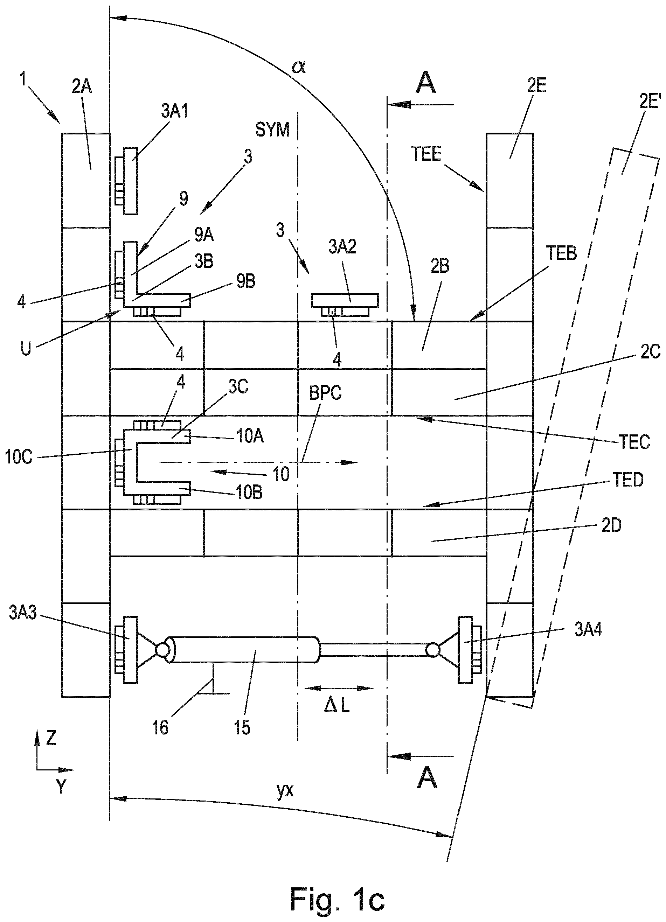

In Fig.1a ist eine beispielhafte Ausgestaltung einer Transporteinrichtung 1 gemäß der Erfindung in einer Schnittansicht gemäß der Schnittlinie A-A in Fig.1c dargestellt. In der Transporteinrichtung 1 ist ein erster Planarmotor 2A vorgesehen, der eine erste Transportebene TEA ausbildet. Im dargestellten Beispiel ist die erste Transportebene TEA eine vertikale Ebene, mit einer Hochachse Z und einer Längsachse X. Der erste Planarmotor 2A ist hier aus einer Mehrzahl i von Transportsegmenten TSi aufgebaut, die aneinander angrenzen, um die erste Transportebene TEA auszubilden. Dadurch kann ein Planarmotor 2 modular aufgebaut werden und es können Transportebenen TEi verschieden großer Fläche realisiert werden. Natürlich ist dieser modulare Aufbau aber nur optional und ein Planarmotor 2 könnte auch nur durch eine einzige Baugruppe bzw. ein einziges Transportsegment TSi ausgebildet sein.

In der ersten Transportebene TEA des ersten Planarmotors 2A können Transporteinheiten 3 zweidimensional bewegt werden. Beispielsweise wäre eine Bewegung nur in einer Achsrichtung entlang der Hochachse Z oder der Längsachse X möglich oder ein zweidimensionales Bewegungsprofil mit einer Z-Koordinate und einer X-Koordinate in der ersten Transportebene TEA, wie durch das Bewegungsprofil BPA der Transporteinheit 3A angedeutet ist. Am ersten Planarmotor 2A sind dazu Antriebsspulen 6 vorgesehen, die von einer Steuerungseinheit 5A angesteuert werden. An die Antriebsspulen 6 kann eine elektrische Spannung angelegt werden, um ein Magnetfeld zu erzeugen. Durch entsprechende Ansteuerung nebeneinander angeordneter Antriebsspulen 6 kann ein im Wesentlichen bewegtes Magnetfeld erzeugt werden. Die Antriebsspulen 6 sind vorteilhafterweise so am ersten Planarmotor 2A angeordnet, dass sich das Magnetfeld in beliebige Richtungen in der ersten Transportebene TEA erstrecken kann, um entsprechende Bewegungsprofile der Transporteinheiten 3 zu realisieren. Als Transportebene TEi ist hier keine Ebene im mathematischen Sinn zu verstehen, sondern eine durch den jeweiligen Planarmotor 2 begrenzte ebene Transportfläche, auf der sich die Transporteinheiten 3 bewegen können.

An den Transporteinheiten 3 sind jeweils Antriebsmagnete 4 angeordnet, beispielsweise Permanentmagnete, die mit den Antriebsspulen 6 zusammenwirken, um eine Antriebskraft auf die Transporteinheit 3 auszuüben. Je nach Ansteuerung der Antriebsspulen 6 wird damit ein bewegtes Magnetfeld erzeugt, das mit den Antriebsmagneten 4 zusammenwirkt, um die Transporteinheit 3 zu bewegen. Im Betrieb ist zwischen Antriebsspulen 6 und Antriebsmagneten 4 ein Luftspalt zwischen den Transporteinheiten 3 und dem jeweiligen Planarmotor 2 vorgesehen. Neben der zweidimensionalen Bewegung in der Transportebene TEA (bzw. allgemein TEi) ist auch eine gewisse Bewegung der Transporteinheiten 3 in Hochrichtung möglich, also normal auf die Transportebene TEi. Durch eine entsprechende Ansteuerung der Antriebsmagnete 6 kann der Luftspalt in begrenztem Maße erhöht und verringert werden, wodurch die Transporteinheit 3 in Hochrichtung bewegt werden kann. Die Größe des verfügbaren Bewegungsspielraums in Hochrichtung hängt dabei im Wesentlichen von der konstruktiven Ausgestaltung der Transporteinrichtung 1 ab, insbesondere vom maximal erzeugbaren Magnetfeld der Antriebsspulen 6 und der Antriebsmagnete 4, sowie der Masse und Belastung der Transporteinheit (z.B. vom Gewicht eines transportierten Objektes). Je nach Größe und Auslegung der Transporteinrichtung 1 kann der verfügbare Bewegungsbereich in Hochrichtung beispielsweise im Bereich weniger mm bis mehrere Zentimeter betragen.

Die Transporteinheiten 3 können in beliebiger Weise am Planarmotor 2, bzw. an der Transportebene TE, gehalten werden, beispielsweise um den Luftspalt aufrechtzuerhalten. Dazu können beliebige geeignete Führungselemente an den Transporteinheiten 3 vorgesehen sein.

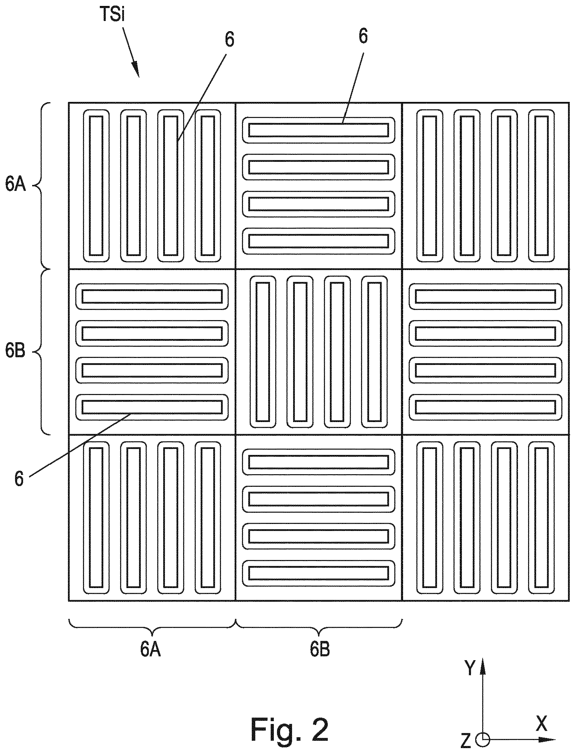

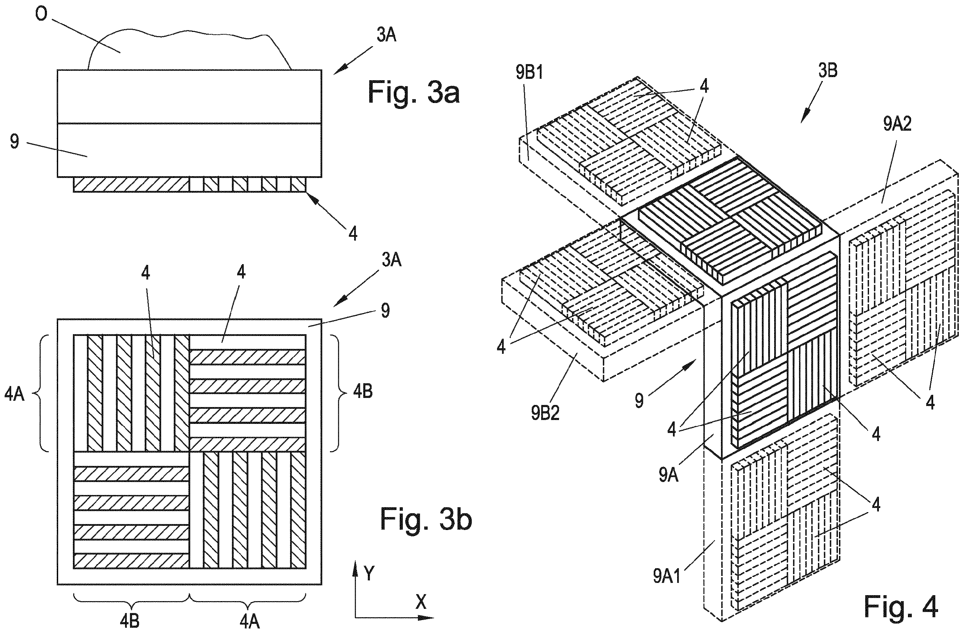

Der Aufbau und die Funktionsweise eines Planarmotors sind aber grundsätzlich bekannt, weshalb an dieser Stelle keine detailliertere Beschreibung erfolgt. Allgemein ist bekannt, dass ein Planarmotor 2 immer einen Stator als feststehende Komponente aufweist und zumindest eine Transporteinheit 3 als bewegliche Komponente aufweist. Der Stator bildet bekanntermaßen die Transportebene TE aus, in der die zumindest eine Transporteinheit 3 durch elektromagnetisches Zusammenwirken der Antriebsspulen 6 und der Antriebsmagnete 4 bewegt werden kann. Die Antriebsspulen 6 sind in der Regel am Stator angeordnet und die Antriebsmagnete 4 sind üblicherweise an der Transporteinheit 3 angeordnet. Natürlich ist bekanntermaßen aber auch die umgekehrte Variante denkbar, mit den Antriebsspulen 6 an der Transporteinheit 3 und den Antriebsmagneten 4 am Stator. Eine beispielhafte Anordnung von Antriebsspulen 6 an einem Transportsegment TSi ist in Fig.2 dargestellt und wird nachfolgend noch im Detail beschrieben. Eine beispielhafte Anordnung von Antriebsmagneten 4 an einer Transporteinheit 3 ist in Fig.3a+3b und Fig.4 dargestellt.

In der Transporteinrichtung 1 ist weiters zumindest ein zweiter Planarmotor 2 vorgesehen, der eine zweite Transportebene TEB ausbildet, wobei die Transportebenen TEA, TEB der Planarmotoren 2A, 2B aneinander angrenzen und in einem bestimmten Angrenzungswinkel α zueinander geneigt sind. Die zumindest zwei Planarmotoren 2A, 2B müssen aber natürlich nicht als baulich getrennte Einheiten ausgebildet sein, sondern sie könnten beispielsweise auch in Form einer integralen Einheit realisiert sein, an der die Transportebenen TEA, TEB vorgesehen sind. Im dargestellten Beispiel stehen die beiden Transportebenen TEA, TEB normal aufeinander, der Angrenzungswinkel α beträgt damit 90 Grad. Natürlich wäre aber auch ein anderer Winkel denkbar. Vorzugsweise beträgt der Angrenzungswinkel α zwischen 30° und 150°, besonders bevorzugt 90°. Allgemein ist unter dem Angrenzungswinkel α zwischen zwei angrenzenden Transportebenen TEi der Winkel zwischen den Normalvektoren der angrenzenden Transportebenen TEi zu verstehen (hier TEA, TEB). Am zweiten Planarmotor 2B sind in analoger Weise wie am ersten Planarmotor 2A (nicht dargestellte) Antriebsspulen 6 vorgesehen, die von einer Planarmotor-Steuerungseinheit 5B angesteuert werden, um mit Antriebsmagneten 4 der Transporteinheiten 3 elektromagnetisch zusammenzuwirken, um die Transporteinheiten 3 zweidimensional in der zweiten Transportebene TEB zu bewegen.

Natürlich können auch noch weitere Planarmotoren 2 vorgesehen sein, hier beispielsweise ein dritter Planarmotor 2C, ein vierter Planarmotor 2D sowie ein fünfter Planarmotor 2E. Die Transportebenen TEC, TED des dritten und vierten Planarmotors 2C, 2D grenzen ebenfalls direkt an die Transportebene TEA des ersten Planarmotors 2A an und stehen normal darauf. Der dritte Planarmotor 2C grenzt hier auch direkt an den zweiten Planarmotor 2B an, sodass einander abgewandte und parallele Transportebenen TEB, TEC resultieren. Die Planarmotoren 2B, 2C, 2D sind hier im Wesentlichen identisch ausgeführt mit gleichen Dimensionen in Hoch-, Längs- und Querrichtung Z, X, Y. Allerdings ist der vierte Planarmotor 2D hier in Längsrichtung X versetzt zum zweiten und dritten Planarmotor 2B, 2C angeordnet. Natürlich ist dies nur beispielhaft und es wären auch beliebige andere Konfigurationen möglich.

Der fünfte Planarmotor 2E ist so angeordnet, dass seine Transportebene TEE der Transportebene TEA des ersten Planarmotors 2A zugewandt ist, wobei die Transportebenen TED, TEA hier parallel zueinander sind. Dadurch ergibt sich eine im Wesentlichen symmetrische Transporteinrichtung 1 mit einer Symmetrieebene SYM (Fig.1b). So wie der erste Planarmotor 2A sind auch die anderen Planarmotoren 2B, 2C, 2D, 2E aus mehreren aneinander angrenzenden Transportsegmenten TSi aufgebaut, auf welchen jeweils Antriebsspulen 6 vorgesehen sind. Durch den modularen Aufbau kann beispielsweise mit nur einem Typ eines Transportsegments TSi eine Transporteinrichtung 1 mit mehreren Planarmotoren 2, auch mit jeweils unterschiedlich großen Transportebenen, realisiert werden.

Im gezeigten Beispiel ist für jeden Planarmotor 2A-2E jeweils eine Planarmotor-Steuerungseinheit 5A-5E vorgesehen, mit welcher die Antriebsspulen 6 des jeweiligen Planarmotors 2A-2E angesteuert werden können, wie in Fig.1b dargestellt ist. Die Planarmotor-Steuerungseinheiten 5A-5E sind hier mit einer übergeordneten Transporteinrichtungs-Steuerungseinheit 7 verbunden. Die Planarmotor-Steuerungseinheiten 5A-5E könnten aber natürlich auch in die übergeordneten Transporteinrichtungs-Steuerungseinheit 7 integriert sein. Es kann auch vorgesehen sein, dass für jedes Transportsegment TSi, oder eine Gruppe von Transportsegmenten TSi, jeweils eine Segmentsteuereinheit vorgesehen ist, die auch in einer Planarmotor-Steuerungseinheit 5A-5E integriert sein kann. Die Transporteinrichtungs-Steuerungseinheit 7 ist hier an eine Benutzerschnittstelle 8, beispielsweise einen Computer, angebunden, über die die Transporteinheit 1 gesteuert werden kann. Über die Transporteinrichtungs-Steuerungseinheit 7 können die Bewegungsprofile von Transporteinheiten 3, die auf unterschiedlichen Planarmotoren 2A-2E bewegt werden miteinander synchronisiert bzw. aufeinander abgestimmt werden, beispielsweise um eine Kollision von Transporteinheiten 3 oder von damit transportierten Objekten zu vermeiden. Auf den Planarmotor-Steuerungseinheiten 5A-5E läuft jeweils ein Steuerungsprogramm, das die gewünschten Bewegungsprofile der Transporteinheiten 3 realisiert.

An der Transporteinrichtung 1 können verschiedene Transporteinheiten 3 gleichzeitig und unabhängig voneinander bewegt werden. Im dargestellten Beispiel ist am ersten und am zweiten Planarmotor 2A, 2B jeweils eine einfach wirkende Transporteinheit 3A1, 3A2 vorgesehen. Die einfach wirkenden Transporteinheiten 3A1, 3A2 können damit im Wesentlichen beliebig zweidimensional in der jeweiligen Transportebene TEA, TEB bewegt werden. Die dargestellte einfach wirkende Transporteinheit 3A1 am ersten Planarmotor 2A kann beispielsweise gemäß des Bewegungsprofils BPA mit einer Koordinate in Hochrichtung Z und einer Koordinate in Längsrichtung X in der ersten Transportebene TEA bewegt werden, wie in Fig.1a angedeutet ist. Die dargestellte einfach wirkende Transporteinheit 3A1 am zweiten Planarmotor 2A kann beispielsweise gemäß des in Fig.1b dargestellten Bewegungsprofils BPA mit einer Koordinate in Querrichtung Y und einer Koordinate in Längsrichtung X in der zweiten Transportebene TEB bewegt werden.

Eine einfach wirkende Transporteinheit 3A weist nur an einer Seite Antriebsmagnete 4 auf, wie beispielhaft in Fig.4a+4b dargestellt ist. Eine einfach wirkende Transporteinheit 3A kann damit nur in einer Transportebene TEi bewegt werden, indem die Antriebsmagnete 4 der einfach wirkenden Transporteinheit 3A mit den Antriebsspulen 6 des entsprechenden Planarmotors 2 zusammenwirken. Eine Bewegung einer einfach wirkenden Transporteinheit 3A beispielsweise von der ersten Transportebene TEA auf die zweite Transportebene TEB ist nicht möglich. Allerdings könnte eine einfach wirkende Transporteinheit 3A natürlich manuell, beispielsweise von einem Benutzer oder einer Manipulationseinrichtung (z.B. Kran oder Roboter) von der Transportebene TEi eines Planarmotors 2 aufgenommen werden und auf die Transportebene TEi eines anderen Planarmotors 2 abgesetzt werden und auf dieser weiterbewegt werden.

Erfindungsgemäß ist in der Transporteinrichtung 1 zumindest eine mehrfach wirkende Transporteinheit 3B, 3C vorgesehen, die entweder in der Transportebene TEi eines Planarmotors 2 zweidimensional bewegbar ist oder zugleich in den angrenzenden Transportebenen TEi von zumindest zwei Planarmotoren 2 eindimensional bewegbar ist. An der mehrfach wirkenden Transporteinheit 3B, 3C sind zumindest erste Antriebsmagnete 4 angeordnet, die vorgesehen sind, um mit den Antriebsspulen 6 eines Planarmotors 2 elektromagnetisch zusammenzuwirken und zumindest zweite Antriebsmagnete 4 angeordnet, die vorgesehen sind, um mit den Antriebsspulen 6 eines Planarmotors 2 mit einer angrenzenden Transportebene TEi elektromagnetisch zusammenzuwirken.

Im dargestellten Beispiel ist eine doppelt wirkende Transporteinheit 3B vorgesehen, die einen im Wesentlichen L-förmigen Grundkörper 9 aufweist. An einem Schenkel 9A des L-förmigen Grundkörpers 9 der Transporteinheit 3B sind erste Antriebsmagnete 4 vorgesehen, die mit den Antriebsspulen 6 des ersten Planarmotors 2A zusammenwirken. Am zweiten Schenkel 9B des L-förmigen Grundkörpers sind zweite Antriebsmagnete 4 vorgesehen, die mit den Antriebsspulen 6 des zweiten Planarmotors 2B zusammenwirken. Der Winkel zwischen den Schenkeln 9A, 9B des L-förmigen Grundkörpers 9 entspricht im Wesentlichen dem Angrenzungswinkel α zwischen der ersten und zweiten Transportebene TEA, TEB, hier z.B. 90 Grad.

Die doppelt wirkende Transporteinheit 3B im gezeigten Beispiel kann nun beispielsweise nur in der ersten Transportebene TEA des ersten Planarmotors 2A zweidimensional bewegt werden. Dazu werden die Antriebsspulen 6 des ersten Planarmotors 2A entsprechend von der Planarmotor-Steuerungseinheit 5A (oder der Transporteinrichtungs-Steuerungseinheit 7) angesteuert, um mit den ersten Antriebsmagneten 4 am ersten Schenkel 9A der doppelt wirkenden Transporteinheit 3B zusammenzuwirken, um eine Antriebskraft zu erzeugen. Die doppelt wirkende Transporteinheit 3B könnte damit beispielsweise gemäß des Bewegungsprofils BPB1 mit den Koordinaten Z, X in der ersten Transportebene TEA bewegt werden. Die doppelt wirkende Transporteinheit 3B könnte aber beispielsweise auch nur in der zweiten Transportebene TEB des zweiten Planarmotors 2B bewegt werden. Dazu werden die Antriebsspulen 6 des zweiten Planarmotors 2B entsprechend von der Planarmotor-Steuerungseinheit 5B (oder der Transporteinrichtungs-Steuerungseinheit 7) angesteuert, um mit den zweiten Antriebsmagneten 4 am zweiten Schenkel 9B der doppelt wirkenden Transporteinheit 3B zusammenzuwirken, um eine Antriebskraft zu erzeugen. Die doppelt wirkende Transporteinheit 3B könnte damit beispielsweise gemäß des Bewegungsprofils BPB2 mit den Koordinaten X, Y in der zweiten Transportebene TEB bewegt werden.

In besonders vorteilhafter Weise kann die doppelt wirkende Transporteinheit 3B aber auch zugleich an der ersten Transportebene TEA des ersten Planarmotors 2A und der zweiten Transportebene TEB des zweiten Planarmotors 2B eindimensional bewegt werden. Dazu werden die Antriebsspulen 6 des ersten Planarmotors 2A und/oder die Antriebsspulen 6 des zweiten Planarmotors 6 entsprechend von der Planarmotor-Steuerungseinheit 5A und/oder der Planarmotor-Steuerungseinheit 5B (oder der Transporteinrichtungs-Steuerungseinheit 7) angesteuert, um mit den ersten Antriebsmagneten 4 am ersten Schenkel 9A und/oder mit den Antriebsmagneten 4 am zweiten Schenkel 9B der doppelt wirkenden Transporteinheit 3B zusammenzuwirken, um eine Antriebskraft zu erzeugen. Die doppelt wirkende Transporteinheit 3B könnte damit beispielsweise gemäß des Bewegungsprofils BPB3 mit der Koordinate X bewegt werden. Das entspricht im Wesentlichen einer eindimensionalen Bewegung in Richtung der Schnittlinie der beiden angrenzenden Transportebenen TEA, TEB. Beispielsweise kann es beim Transport schwerer Objekte vorteilhaft sein, wenn die Antriebsspulen 6 beider Planarmotoren 2A, 2B bestromt werden, um eine höhere Antriebskraft auf die doppelt wirkende Transporteinheit 3B zu erzeugen.

In vorteilhafter Weise kann der Bereich der angrenzenden Transportebenen TEA, TEB auch als eine Übergabestelle U verwendet werden (siehe Fig.1c), um eine doppelt (oder mehrfach) wirkende Transporteinheit 3B beispielsweise von der Transportebene TEA auf die benachbarte Transportebene TEB zu bewegen. Dadurch können relativ komplexe Bewegungsmuster realisiert werden. Beispielsweise könnte die doppelt wirkende Transporteinheit 3B zuerst in der zweiten Transportebene TEB des zweiten Planarmotors 2B in Querrichtung Y bis zur Übergabestelle U bewegt werden (in Fig.1c von rechts nach links), wobei die Bewegungssteuerung über die Antriebsspulen 6 des zweiten Planarmotors 2B erfolgt. In der Übergabestelle U wird die doppelt wirkende Transporteinheit 3B vorteilhafterweise kurz gestoppt und von der Übergabestelle U kann die doppelt wirkende Transporteinheit 3B in der Transportebene TEA des ersten Planarmotors 2A bewegt werden, wobei die Bewegungssteuerung über die Antriebsspulen 6 des ersten Planarmotors 2B erfolgt. Von der Transportebene TEA des ersten Planarmotors 2A könnte die doppelt wirkende Transporteinheit 3B wiederum auf die Transportebene TED des vierten Planarmotors 2D übergeben werden usw.

Eine Übergabe wäre grundsätzlich aber auch ohne Richtungsänderung der doppelt wirkenden Transporteinheit 3B möglich. Beispielsweise könnte die doppelt wirkende Transporteinheit 3B gemäß des Bewegungsprofils BPB3 in Längsrichtung X bewegt werden, wobei der Antrieb über die Antriebsspulen 6 des zweiten Planarmotors 2B und/oder über die Antriebsspulen 6 des ersten Planarmotors 2A erfolgen kann. Am Ende des zweiten Planarmotors 2B in Längsrichtung X könnte der erste Planarmotor 2A den Antrieb übernehmen und die doppelt wirkende Transporteinheit 3B könnte von den Antriebsspulen 6 des ersten Planarmotors 2A weiter in Längsrichtung X und/oder in Hochrichtung Z bewegt werden. In diesem Fall wäre kein Stillstand bei der Übergabe erforderlich.

Im dargestellten Beispiel ist auch eine dreifach wirkende Transporteinheit 3C dargestellt. Die dreifach wirkende Transporteinheit 3C weist einen im Wesentlichen U-förmigen Grundkörper 10 mit drei Schenkeln 10A, 10B, 10C auf, auf denen jeweils Antriebsmagnete 4 vorgesehen sind. Bei einer entsprechend ausgestalteten Transporteinrichtung 1 wie in Fig.1a-1c wäre damit beispielsweise ein gleichzeitiger Antrieb mittels drei Planarmotoren 2A, 2C, 2D (oder 2E, 2C, 2D möglich. Natürlich könnte die dreifach wirkende Transporteinheit 3C aber auch nur in einer einzigen Transportebene TEA-TEE bewegt werden.

Natürlich wäre auch eine (nicht dargestellte) 4-fach, 6-fach oder allgemein x-fach wirkende Transporteinheit 3 denkbar, die an 4, 6, ...x Seiten Antriebsmagnete 4 aufweist. Damit könnte die x-fach wirkende Transporteinheit 3 in x Transportebenen TEi gleichzeitig eindimensional bewegt werden oder in jeder der x Transportebenen TEi zweidimensional. Die Anzahl der Seiten, an denen Antriebsmagnete 4 vorgesehen wird dabei in vorteilhafter Weise mit den verfügbaren Planarmotoren 2 und deren relativ zueinander angeordneten Transportebenen TEi abgestimmt.

Gemäß einer weiteren vorteilhaften Ausgestaltung der Erfindung sind in der Transporteinrichtung 1 zumindest zwei Planarmotoren 2 mit einander zugewandten Transportebenen TEi vorgesehen, wobei in der Transportebene TEi eines der Planarmotoren 2 zumindest eine Transporteinheit 3 vorgesehen ist, die mittels einer Verbindungseinheit 15 mit zumindest einer, in der Transportebene TEi des zumindest einen anderen Planarmotors 2 vorgesehenen Transporteinheit 3 verbunden ist. Vorteilhafterweise sind die einander zugewandten Transportebenen TEi dabei auch voneinander beabstandet angeordnet, sie grenzen also vorzugsweise nicht aneinander an bzw. schneiden sich nicht.

Vorzugsweise ist zwischen den einander zugwandten Transportebenen TEi ein Anordnungswinkel γ vorgesehen, der maximal 45° beträgt, wobei es besonders vorteilhaft ist, wenn der Anordnungswinkel γ = 0° beträgt, indem die einander zugewandten Transportebenen TEi gegenüberliegend und parallel zueinander angeordnet sind. Allgemein ist unter dem Anordnungswinkel γ der Winkel zwischen den Normalvektoren der jeweiligen einander zugewandten Transportebenen TEi zu verstehen. Im dargestellten Beispiel sind in der Transporteinrichtung 1 zwei einfach wirkende Transporteinheiten 3A3, 3A4 vorgesehen, wobei die einfach wirkende Transporteinheit 3A3 in der Transportebene TEA des ersten Planarmotors 2A bewegbar ist und die Transporteinheit 3A4 in der Transportebene TEE des fünften Planarmotors 2E bewegbar ist. Die Transportebenen TEE des fünften Planarmotors 2E und die Transportebene TEA des ersten Planarmotors 2A sind hier parallel angeordnet und einander zugewandt, der Anordnungswinkel γ beträgt damit 0°. Natürlich könnten die Transportebenen TEA, TEE aber auch zueinander geneigt sein.

Die Planarmotoren 2A, 2E könnten aber beispielsweise auch so angeordnet sein, dass die einander zugewandten Transportebenen TEA, TEE in einem Anordnungswinkel γ von maximal 45° zueinander geneigt sind wie in Fig.1b und Fig. 1c gestrichelt angedeutet ist. Dabei könnte der fünfte Planarmotor 2E beispielsweise relativ zum ersten Planarmotor 2A so angeordnet sein, dass die Transpoportebene TEE des fünften Planarmotors 2E' in einem Anordnungswinkel γ_{Z} um die Z-Achse zur Transportebene TEA des ersten Planarmotors 2A geneigt ist (Fig.1b) und/oder in einem Anordnungswinkel γ_{X} um die die X-Achse zur Transportebene TEA des ersten Planarmotors 2A geneigt ist (Fig.1c). Eine Verdrehung relativ zueinandner um die Y-Achse ist nicht begrenzt, da sich der Anordnungswinkel γ zwischen den Transportebenen TEA, TEE dadurch nicht ändert.

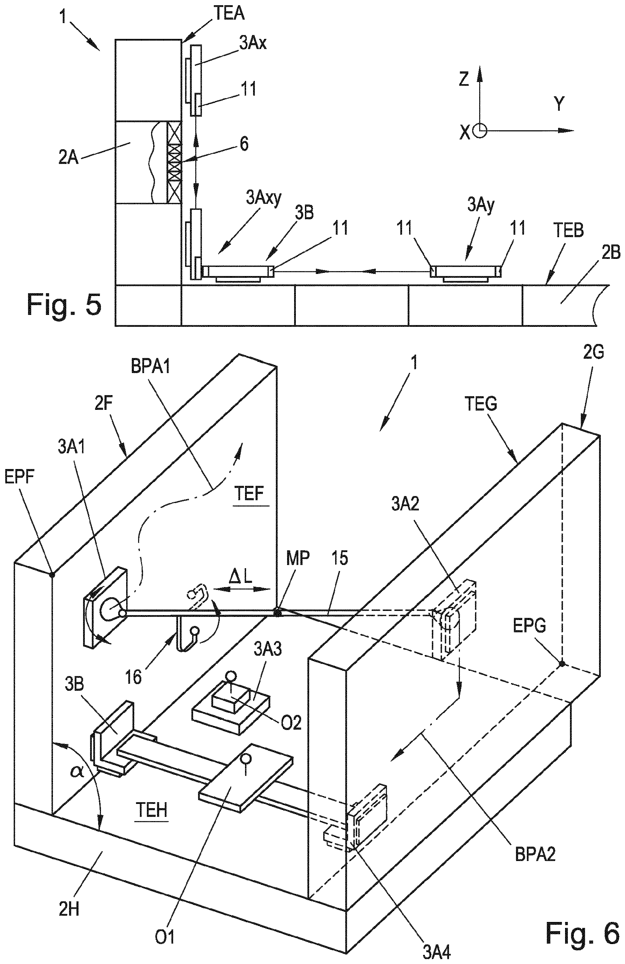

Die Verbindungseinheit 15 ist hier als eine im Wesentlichen starre Verbindungsstange ausgeführt, die an beiden Transporteinheiten 3A3, 3A4 gelenkig angebunden ist. Vorzugsweise ist die Verbindungseinheit 15 auch verstellbar ausgeführt, um eine Verbindungseinheitslänge während der Bewegung der Transporteinheiten 3A3, 3A4 an einen veränderlichen Abstand zwischen den zumindest zwei Transporteinheiten 3A3, 3A4 anzupassen, wie in Fig.1c durch die Längendifferenz ΔL angedeutet ist. An der Verbindungseinheit 15 kann beispielsweise auch eine Aufnahmeeinheit 16 vorgesehen sein, um ein (nicht dargestelltes) Objekt aufzunehmen und zu transportieren. Die Aufnahmeeinheit 16 ist in Fig. 1c nur angedeutet, die konkrete Ausgestaltung hängt natürlich von der Anwendung der Transporteinrichtung 1 ab und liegt im Ermessen des Fachmanns. Die Funktion der Verbindungseinheit 15 wird nachfolgend anhand des Beispiels in Fig.6 noch näher erläutert.

Natürlich könnte als Verbindungseinheit 15 aber auch direkt ein starres oder flexibles Produkt vorgesehen sein, das mit zwei oder mehreren Transporteinheiten 3 verbunden ist. Dadurch könnten beispielsweise flexible Kunststofffolie, oder Textilien, transportiert und/oder z.B. von Transporteinheiten 3 gespannt oder gedehnt werden. Denkbar wäre z.B. auch, dass Seile, Kabel, Drähte, etc. als Verbindungseinheit 15 vorgesehen werden und diese beispielsweise durch die Relativbewegung der Transporteinheiten 3 verdrillt werden.

Weiters wäre es denkbar, dass als Verbindungseinheit 15 zwischen zumindest zwei Transporteinheiten 3 ein separater Planarmotor 2 vorgesehen wird. Der Planarmotor 2 könnte dann von den Transporteinheiten 3 bewegt werden und auf der Transportebene TEi des Planarmotors 2 könnte wiederum eine Transporteinheit 3 zweidimensional bewegt werden. Statt eines Planarmotors 2 könnte aber auch ein bekannter Langstatorlinearmotor als Verbindungseinheit 15 vorgesehen werden. An einem Stator des Langstatorlinearmotors sind in der Regel mehrere Antriebsspulen in einer Bewegungsrichtung hintereinander angeordnet, die bestromt werden können, um ein bewegtes Magnetfeld zu erzeugen. Eine Transporteinheit, an der mehre Antriebsmagnete hintereinander angeordnet sind, kann in Abhängigkeit des von den Antriebsspulen erzeugten Magnetfelds entlang des Stators in der Bewegungsrichtung eindimensional bewegt werden. Auch ein Stetigförderer, wie z.B. ein Bandförderer oder ein Kettenförderer könnten als Verbindungseinheit 15 vorgesehen werden. Daraus ist ersichtlich, dass eine Verbindungseinheit 15 in vielfältigsten Ausführungen verwendet werden könnte, wodurch eine Vielzahl von verschiedenen Bewegungsabläufen möglich ist.

In Fig.2 ist eine beispielhafte Anordnung von Antriebsspulen 6 auf einem Transportsegment TSi dargestellt. Das Transportsegment TSi ist so am Planarmotor 2 angeordnet, dass die Antriebsspulen 6 im Betrieb den Antriebsmagneten 4 der Transporteinheiten 3 zugewandt sind, um eine Transportebene TEi auszubilden. Das Transportsegment TSi weist hier eine im Wesentlichen quadratische Grundfläche auf, natürlich sind aber auch beliebige andere Formen möglich. Um eine zweidimensionale Bewegung der Transporteinheiten 3 in der zu ermöglichen, sind die Antriebsspulen 6 in Spulengruppen 6a, 6b unterteilt. Die Spulengruppen 6A, 6B weisen jeweils eine bestimmte Anzahl von Antriebsspulen 6 auf, wobei sich die Ausrichtung der Antriebsspulen 6 der Spulengruppen 6A, 6B unterscheidet. Im gezeigten Beispiel sind jeweils vier Antriebsspulen 6 je Spulengruppe 6A, 6B vorgesehen und die Antriebsspulen 6 der Spulengruppen 6A, 6B sind um 90 Grad zueinander gedreht.

Natürlich wären aber auch andere Anordnungen, Gruppierungen und Größenverhältnisse möglich. Es könnten beispielsweise auch mehrere Schichten von Antriebsspulen 6 vorgesehen sein, die übereinander angeordnet sind. Beispielsweise könnte im dargestellten Beispiel eine weitere Schicht von Antriebsspulen 6 vorgesehen sein, beispielsweise unter (oder über) den dargestellten Antriebsspulen 6 in Z-Richtung. Vorteilhafterweise könnten sich die Spulengruppen 6A, 6B dabei in Z-Richtung abwechseln. Dadurch könnte ein im Wesentlichen durchgängiges bewegtes Magnetfeld in den Achsrichtungen Y und X erzeugt werden. Die Anordnung erlaubt zudem ein zweidimensionales Bewegungsprofil der Transporteinheiten 3 in der Transportebene TEi, hier mit Koordinaten in X und Y. Auch eine Rotation von Transporteinheiten 3 um eine Achse normal auf die Transportebene TEi ist möglich (hier um die Z-Achse).

Die Antriebsspulen 6 sind vorzugsweise als sogenannte Luftspulen ohne Eisenkern ausgeführt, um die permanentmagnetische Anziehungskraft zwischen Transporteinheiten 3 und Transportsegmenten TSi zu reduzieren. Dadurch werden die Transporteinheiten 3 durch die Antriebsmagnete 4 weniger stark in Richtung der Transportebene TEi angezogen, was insbesondere bei mehrfach wirkenden Transporteinheiten 3B, 3C vorteilhaft ist, um eine Übergabe von einer Transportebene TEi auf eine angrenzende Transportebene TEi zu erleichtern.

In Fig.3a ist eine einfach wirkende Transporteinheit 3A in einer Seitenansicht dargestellt, Fig.3b zeigt die einfach wirkende Transporteinheit 3A in Draufsicht von unten auf die Antriebsmagnete 4. Die einfach wirkende Transporteinheit 3A weist einen Grundkörper 9 mit einer im Wesentlichen rechteckigen Grundfläche auf. An der Unterseite, die im Betrieb der Transportebene TEi eines Planarmotors 2 zugewandt ist, sind in bekannter Weise Antriebsmagnete 4 angeordnet. Auf der gegenüberliegenden Oberseite des Grundkörpers 9 kann beispielsweise ein zu transportierendes Objekt O angeordnet werden. Ähnlich wie die Antriebsspulen 6 am Transportsegment TSi sind auch die Antriebsmagnete 4 in Magnetgruppen 4A, 4B aufgeteilt. In jeder Magnetgruppe 4A, 4B ist eine bestimmte Anzahl von Antriebsmagneten 4 vorgesehen, wobei sich Antriebsmagnete 4 unterschiedlicher magnetischer Polung abwechseln, wie in Fig.4b durch die schraffierten und nicht schraffierten Antriebsmagnete 4 angedeutet ist. Die Antriebsmagnete 4 einer Magnetgruppen 4A sind anders orientiert als die Antriebsmagnete 4 der jeweils anderen Magnetgruppen 4B.

Im dargestellten Beispiel stehen die Antriebsmagnete 4 in einem Winkel von 90 Grad zueinander. Die Magnetgruppen 4B sind hier für eine Bewegung der Transporteinheit 3A in Y-Richtung vorgesehen, die Magnetgruppen 4A für eine Bewegung der Transporteinheit 3A in X-Richtung. Auch hier wäre wiederum eine Anordnung mehrerer Schichten von Magnetgruppen 4A, 4B denkbar, analog wie bei den zuvor beschriebenen Spulengruppen 6A, 6B der Antriebsspulen 6. Dadurch kann eine höhere Antriebskraft erzeugt werden und eine gleichmäßigere Bewegung und eine genauere Positionierung der Transporteinheit 3A erfolgen. Natürlich ist die dargestellte einfach wirkende Transporteinheit 3A nur beispielhaft zu verstehen und es wären auch andere Formen und andere Anordnungen von Antriebsmagneten 4 denkbar. Beispielsweise könnte eine einfach wirkende Transporteinheit 3A mit einem Grundkörper 9 mit einer runden Grundfläche vorgesehen sein. Die Antriebsmagnete 4 könnten dann ringförmig angeordnet werden, wobei sich wiederum vorzugsweise Magnetgruppen 4A, 4B in Umfangsrichtung abwechseln.

In Fig.4 ist eine doppelt wirkende Transporteinheit 3B dargestellt, die bereits anhand Fig.1a-c beschrieben wurde. Die doppelt wirkende Transporteinheit 3B weist einen L-förmigen Grundkörper 9 auf, an dessen Schenkeln 9A, 9B jeweils Antriebsmagnete 4 vorgesehen sind. Der Winkel zwischen den Schenkeln 9A, 9B entspricht dabei natürlich vorzugsweise dem Angrenzungswinkel α zwischen zwei angrenzenden Transportebenen TEi, auf denen die doppelt wirkende Transporteinheit 3B bewegt werden soll. Die Anordnung der Antriebsmagnete 4 auf dem jeweiligen Schenkel 9A, 9B entspricht im Wesentlichen der Anordnung der einfach wirkenden Transporteinheit 3A aus Fig.3a+3b. Wiederum könnte natürlich auch hier eine andere Form des Grundkörpers 9 und/oder eine andere Anordnung der Antriebsmagnete 4 vorgesehen werden. Da die Funktion eines Planarmotors 2 grundsätzlich im Stand der Technik bekannt ist, wird an dieser Stelle nicht mehr näher darauf eingegangen.

Eine doppelt wirkende Transporteinheit 3B muss aber nicht zwingend identisch ausgestaltete Schenkel 9A, 9B aufweisen. Es wäre beispielsweise denkbar, dass einer der Schenkel 9A, 9B länger ist, als der jeweils zweite Schenkel 9A, 9B, wie in Fig.4 gestrichelt angedeutet ist. Am verlängerten Schenkel 9A1, 9B1 könnte dann eine größere Anzahl von Antriebsmagnete 4 vorgesehen werden als am jeweils anderen Schenkel 9A, 9B, beispielsweise doppelt so viele, wodurch beispielsweise ein größeres Antriebskraftpotential erreicht wird. Natürlich könnten auch beide Schenkel 9A, 9B länger ausgeführt werden (9A1, 9B1), um jeweils die Anzahl von Antriebsmagnete 4 zu erhöhen. Ein Schenkel, hier der erste Schenkel 9A, könnte aber beispielsweise auch seitlich verlängert werden, wie durch den gestrichelten Schenkelabschnitt 9A2 in Fig.4 angedeutet ist. Ebenso könnte der Schenkel 9B analog an der gleichen Seite erweitert werden oder beispielsweise auch zusätzlich oder alternativ auf der gegenüberliegenden Seite, wie durch den Schenkelabschnitt 9B2 angedeutet ist. Die Schenkel könnten sich aber auch durch die Anzahl und/oder Größe der Antriebsmagnet 4 unterscheiden. Daraus ist ersichtlich, dass es viele Möglichkeiten gibt, wie eine mehrfach wirkende Transporteinheit ausgestaltet sein kann. Die konkrete konstruktive Ausgestaltung liegt natürlich im Ermessen des Fachmanns und wird vorteilhafterweise an eine jeweilig geplante Anwendung angepasst.

Eine weitere vorteilhafte Ausgestaltung der Erfindung ist in Fig.5 dargestellt. Die Transporteinrichtung 1 in Fig.5 entspricht im Wesentlichen jener in Fig.1c, wobei nur der relevante obere linke Bereich aus Fig.1c dargestellt ist. Im Bereich der angrenzenden Transportebenen TEA, TEB ist eine doppelt wirkende Transporteinheit 3B angeordnet. Die doppelt wirkende Transporteinheit 3B unterscheidet sich von jener in Fig.1a-1c dadurch, dass die doppelt wirkende Transporteinheit 3B in zumindest zwei einfach wirkende Transporteinheiten 3Ax, 3Ay entkoppelbar ist. Dazu ist an den zumindest zwei einfach wirkenden Transporteinheiten 3Ax, 3Ay jeweils zumindest eine Kopplungsvorrichtung 11 vorgesehen, um die Transporteinheiten 3Ax, 3Ay lösbar miteinander zu koppeln, um die mehrfach wirkende Transporteinheit 3B auszubilden.

Nach der Entkopplung kann die einfach wirkende Transporteinheit 3Ax in herkömmlicher Weise zweidimensional in der Transportebene TEA des ersten Planarmotors 2A bewegt werden. Die andere einfach wirkende Transporteinheit 3Ay kann analog in der Transportebene TEB des zweiten Planarmotors 2B bewegt werden. Der Antrieb und die Bewegungssteuerung erfolgt über die Antriebsspulen 6 des jeweiligen Planarmotors 2A, 2B. Die Kopplungsvorrichtungen 11 sind hier nur schematisch angedeutet. Vorzugsweise sind die Kopplungsvorrichtungen 11 standarisiert und auf jeder Transporteinheiten 3Ax, 3Ay identisch, um beliebige Transporteinheiten 3A miteinander zu einer mehrfach wirkenden Transporteinheit koppeln zu können. Die Kopplung / Entkopplung kann durch die Bewegung selbst erfolgen oder kann auch aktiv erfolgen, beispielsweise durch entsprechende Aktoren an den Kopplungsvorrichtungen 11. Die konstruktive Ausführung kann im Wesentlichen beliebig sein, denkbar wäre z.B. eine mechanische Kopplungsvorrichtung 11, beispielsweise form- oder kraftschlüssig oder auch eine magnetische Kopplungsvorrichtung 11.

Die Transporteinheiten 3Ax, 3Ay können natürlich auch wieder zu einer doppelt wirkenden Transporteinheit 3B gekoppelt werden. Dazu werden die Transporteinheiten 3Ax, 3Ay beispielsweise auf der jeweiligen Transportebene TEA, TEB aufeinander zu bewegt, sodass sie in dem Bereich, wo die beiden Transportebenen TEA, TEB aneinander angrenzen aufeinander treffen, wie durch die Pfeile symbolisiert ist. Die Kopplung erfolgt vorzugsweise automatisch, beispielsweise bei Kontakt der beiden Transporteinheiten 3Ax, 3Ay. Nach der Kopplung können die beiden Transporteinheiten 3Ax, 3Ay gemeinsam bewegt werden, es entsteht im Wesentlichen ein Transporteinheitsverbund 3Axy, welcher einer doppelt wirkenden Transporteinheit 3B entspricht. Die Möglichkeiten der Bewegung des gekoppelten Transporteinheitsverbunds 3Axy entspricht dabei im Wesentlichen jener der zuvor anhand Fig.1a-c beschriebenen doppelt wirkenden Transporteinheit 3B. Wenn keine Kopplung mehr gewünscht oder benötigt ist, kann die gekoppelte Transporteinheitsverbund 3Axy wieder gelöst werden und jede Transporteinheit 3Ax, 3Ay kann wieder individuell auf der entsprechenden Transportebene TEA, TEB bewegt werden.

Die Kopplung von zwei Transporteinheiten 3Ax, 3Ay kann gegenüber der zuvor gezeigten doppelt wirkenden Transporteinheit 3B vorteilhaft sein. Einerseits kann das höhere Antriebskraftpotential des doppelten Antriebs (durch die Antriebsspulen 6 des ersten und zweiten Planarmotors 2A, 2B) genutzt werden, wenn der Transporteinheitsverbund 3Axy in Längsrichtung X entlang beider Transportebenen TEA, TEB bewegt wird. Andererseits kann der Transporteinheitsverbund 3Axy für die Bewegung in nur einer Transportebene TEA, TEB aber wieder gelöst werden. Dadurch kann beispielsweise während der Bewegung in der (hier) vertikalen Transportebene TEA die bessere Gewichtsverteilung einer einfach wirkenden Transporteinheit 3A genutzt werden, da bei dieser der Schwerpunkt näher an der Transportebene TEA liegt, als bei einer mehrfach wirkenden Transporteinheit 3B, 3C.

Das L-förmige Profil des Grundkörpers 9 (insbesondere der Schenkel 9B) der doppelt wirkenden Transporteinheit 3B in Fig.1c weist einen im Vergleich zur einfach wirkenden Transporteinheit 3A in Y-Richtung weiter von der Transportebene TEA entfernten Schwerpunkt auf. Wenn die doppelt wirkende Transporteinheit 3B in Fig.1c beispielsweise in der ersten (vertikalen) Transportebene TEA in Hochrichtung Z nach oben bewegt wird, führt dies bedingt durch die Schwerkraft zu einem höheren Kippmoment um die Längsachse X als bei einer einfach wirkenden Transporteinheit 3A. Insbesondere bei Beschleunigungsvorgängen (hier nach oben in Z-Richtung) kann das Kippmoment unter Umständen unzulässig hoch werden, was schlimmstenfalls dazu führen könnte, dass sich die doppelt wirkende Transporteinheit 3B vom Planarmotor 2A löst. Analog können auch mit den Transporteinheiten 3A-3C transportierte Objekte (nicht dargestellt) durch deren zusätzliche Masse in analoger Weise zu einem höheren Kippmoment beitragen, was bei der Auslegung der Transporteinrichtung 1 und bei der Bewegungsplanung der Transporteinheiten 3 zu berücksichtigen ist. Eine Kopplung von einfach wirkenden Transporteinheiten 3A zu einem Transporteinheitsverbund (bzw. im Wesentlichen zu einer mehrfach wirkenden Transporteinheit) ist deshalb vorteilhaft, da der Transporteinheitsverbund für die Bewegung in nur einer Transportebene TEi wieder gelöst werden kann.

In Fig.6 ist eine weitere Ausgestaltung einer Transporteinrichtung 1 dargestellt. Die Transporteinrichtung 1 weist hier zwei Planarmotoren 2F, 2G auf, die voneinander beabstandet angeordnet sind, wobei die beiden Transportebenen TEF, TEG einander zugewandt und parallel sind (Anordnungswinkel γ=0°). Es wäre aber auch möglich, dass die Transportebenen TEF, TEG relativ zueinander in einem Anordnungswinkel γ ≤ 45° geneigt sind, wie anhand des fünften Planarmotors 2E' Fig.1c und Fig.1b gezeigt wurde. In den Transportebenen TEF, TEG der Planarmotoren 2F, 2G sind jeweils einfach wirkende Transporteinheiten 3A1, 3A2 vorgesehen, die zweidimensional in der jeweiligen Transportebene TEF, TEG bewegbar sind. Die Bewegungssteuerung erfolgt wie in den zuvor gezeigten Beispielen über zwei (nicht gezeigte) Planarmotor-Steuerungseinheiten und oder über eine übergeordneten Transporteinheits-Steuerungseinheit, welche die Antriebsspulen der Planarmotoren 2F, 2G ansteuert, um mit den Antriebsmagneten 4 der Transporteinheiten 3A1, 3A2 zusammenzuwirken. Natürlich können die Planarmotoren 2F, 2G auch wiederum aus Transportsegmenten TSi modular aufgebaut sein. Auf eine detailliertere Beschreibung der Funktionsweise wird an dieser Stelle verzichtet.

Die beiden Transporteinheiten 3A1, 3A2 sind mittels einer Verbindungseinheit 15 verbunden. Die Verbindungseinheit 15 kann starr oder flexibel ausgeführt sein. Beispielsweise könnte die Verbindungseinheit 15 einen im Wesentlichen starren Stab aufweisen, der an beiden Transporteinheiten 3A1, 3A2 gelenkig angebunden ist, wie in Fig.6 dargestellt ist. Wie bereits erwähnt ist die Verbindungseinheit 15 vorzugsweise verstellbar ausgeführt, sodass eine Länge der Verbindungseinheit 15 während der Bewegung der Transporteinheiten 3A1, 3A2 veränderlich ist. Dies ist vorteilhaft, da sich der Abstand zwischen den Transporteinheiten 3A während der Bewegung ändern kann.

Beispielsweise kann die Transporteinheit 3A des ersten Planarmotors 2F das angedeutete Bewegungsprofil BPA1 durchführen und die Transporteinheit 3A des zweiten Planarmotors 2G das angedeutete Bewegungsprofil BPA2 durchführen. Damit würden die beiden Transporteinheiten 3A1, 3A2 im Wesentlichen in entgegengesetzte Richtungen bewegt werden, wodurch sich der Abstand zwischen den Transporteinheiten 3A1, 3A2 vergrößert, wie durch die Längendifferenz ΔL in Fig.6 angedeutet ist. Der Abstand könnte sich aber auch verringern, beispielsweise wenn die Transportebenen TEF, TEG nicht parallel angeordnet, sondern zueinander geneigt angeordnet sind. Im dargestellten Fall der parallelen Transportebenen TEF, TEG ist die Länge der Verbindungseinheit 15 vorzugsweise zwischen einer Minimallänge einer Maximallänge verstellbar. Die Minimallänge entspricht dabei beispielsweise dem Abstand zwischen direkt gegenüber befindlichen Transporteinheiten 3A1, 3A2 und die Maximallänge dem Abstand zwischen den Transporteinheiten 3A1, 3A2 wenn sich diese an diagonal gegenüberliegenden Eckpunkten EPF, EPG der Transportebenen TEF, TEG befinden.

Durch die Anordnung einer Verbindungseinheit 15 können sehr komplexe Bewegungsmuster durchgeführt werden. Beispielsweise kann durch Vorgabe bestimmter Bewegungsprofile BPA1, BPA2 für die beiden Transporteinheiten 3A1, 3A2 ein gewünschtes resultierendes Bewegungsprofil eines Mittelpunktes MP (oder eines beliebigen anderen Punktes) der Verbindungseinheit 15 erzeugt werden, das sich aus einer Überlagerung der Bewegungsprofile BPA1, BPA2 ergibt. Beispielsweise könnten auch eine oder mehrere Aufnahmeeinheiten 16 an der Verbindungseinheit 15 vorgesehen sein, um ein oder mehrere Objekte aufzunehmen und zu transportieren, beispielsweise einen Haken wie dargestellt. Da ein Planarmotor 2 auch eine Rotation der Transporteinheit 3A um die Hochachse ermöglicht, könnte z.B. auch eine Schwenkbewegung einer Aufnahmeeinheiten 16 durchgeführt werden, wie in Fig.6 durch den Pfeil an der Transporteinheit 3A1 und die gestrichelte Aufnahmeeinheit 16 angedeutet ist.

Es könnte beispielsweise auch ein zweites Paar Transorteinheiten 3B, 3A4 mit einer Verbindungseinheit 15 vorgesehen sein, wobei die Verbindungseinheiten 15 natürlich auch unterschiedlich ausgeführt sein können. Die doppelt wirkende Transporteinheit 3B und die einfach wirkende Transporteinheit 3A4 sind hier z.B. mit einem starren Träger verbunden. Damit wäre auch eine bestimmte Relativbewegung zwischen zwei Verbindungseinheiten 15 möglich, wodurch die Flexibilität der Transporteinrichtung 1 weiter erhöht werden kann. Denkbar wäre z.B., dass die Aufnahmeeinheit 16 einer Verbindungseinheit 15 ein Objekt an eine Aufnahmeeinheit 16 einer anderen Verbindungseinheit 15 übergibt, etc. Auf diese Weise können vielfältige Bewegungsabläufe mit der Transporteinrichtung 1 durchgeführt werden. Beispielsweise könnten die Transporteinheiten 3A1, 3A2 so bewegt werden, dass mittels der an der Verbindungseinheit 15 vorgesehen Aufnahmeeinheit 16 ein Objekt O1 aufgenommen wird, das an der zweiten Verbindungseinheit 15 transportiert wird. Im dargestellten Beispiel ist die Aufnahmeeinheit 16 als Haken ausgeführt und am Objekt O1 ist eine Öse zum Eingriff für den Haken angeordnet. Wie erwähnt könnte statt des starren Trägers zwischen der doppelt wirkenden Transporteinheit 3B und der einfach wirkenden Transporteinheit 3A4 z.B. auch ein eigener Planarmotor 2, Langstatorlinearmotor oder ein Stetigförderer vorgesehen werden. Dadurch könnte die Bewegung der beiden Transporteinheiten 3B, 3A4 durch einen weiteren oder mehrere Bewegungsfreiheitsgrade überlagert werden.

Natürlich wäre auch eine Kombination mit der Ausführungsform in Fig.1 denkbar, beispielsweise indem die beiden Planarmotoren 2F, 2G mittels eines weiteren Planarmotors 2H verbunden werden, der eine (untere horizontale) Transportebene TEH ausbildet, die dann normal zu den Transportebenen TEF, TEG steht. In der Transportebene TEH könnte beispielsweise wiederum eine einfach wirkende Transporteinheit 3A3 vorgesehen sein, mittels der ein weiteres Objekt O2 bewegt wird, das bei entsprechender Synchronisation der Bewegungsprofile von der Aufnahmeeinheit 16 aufgenommen werden kann. Natürlich können auch mehr als zwei Transporteinheiten 3 mittels einer oder mehrerer Verbindungseinheiten 15 verbunden sein oder es können jeweils eine oder mehrere Kopplungsvorrichtungen 11 an den Transporteinheiten 3 vorgesehen sein. Daraus ist ersichtlich, dass neben den gezeigten Varianten noch viele weitere Ausgestaltungen möglich sind. Die konkrete Auswahl, Anzahl und Kombination von Planarmotoren 2, (einfach und/oder mehrfach wirkenden) Transporteinheiten 3, Kopplungsvorrichtungen 11 und Verbindungseinheiten 15 liegt natürlich im Ermessen des Fachmanns.

## Patentansprüche

1. Transporteinrichtung (1) mit zumindest zwei Planarmotoren (2A, 2B), die jeweils eine Transportebene (TEA, TEB) ausbilden, in der zumindest eine Transporteinheit (3) zweidimensional bewegbar ist, wobei die Transportebenen (TEA, TEB) der zumindest zwei Planarmotoren (2A, 2B) aneinander angrenzen und in einem Angrenzungswinkel (α) zueinander geneigt sind, der 90° beträgt, wobei an jedem Planarmotor (2A, 2B) Antriebsspulen (6) vorgesehen sind, um mit Antriebsmagneten (4) einer Transporteinheit (3) elektromagnetisch zusammenzuwirken, um die Transporteinheit (3) in der jeweiligen Transportebene (TEA, TEB) zu bewegen, wobei an der Transporteinrichtung (1) zumindest eine mehrfach wirkende Transporteinheit (3B, 3C) vorgesehen ist, wobei an der mehrfach wirkenden Transporteinheit (3B, 3C) zumindest erste Antriebsmagnete (4) vorgesehen sind, um mit den Antriebsspulen (6) eines ersten Planarmotors (2A) elektromagnetisch zusammenzuwirken und zumindest zweite Antriebsmagnete (4) vorgesehen sind, um mit den Antriebsspulen (6) eines zweiten Planarmotors (2B) elektromagnetisch zusammenzuwirken, **dadurch gekennzeichnet, dass** in der Transporteinrichtung (1) zumindest ein weiterer Planarmotor (2C, 2D) vorgesehen ist, der eine Transportebene (TEC, TED) ausbildet, die direkt an die Transportebene (TEA) des ersten Planarmotors (2A) angrenzt und normal darauf steht, wobei am zumindest einen weiteren Planarmotor (2C, 2D) Antriebsspulen (6) vorgesehen sind, um mit Antriebsmagneten (4) einer Transporteinheit (3, 3B, 3C) elektromagnetisch zusammenzuwirken, um die Transporteinheit (3, 3B, 3C) in der jeweiligen Transportebene (TEC, TED) zu bewegen, **und dass** die mehrfach wirkende Transporteinheit (3B, 3C) in der Transportebene (TEA, TEB, TEC, TED) eines der Planarmotoren (2A, 2B, 2C, 2D) zweidimensional bewegbar ist oder zugleich in den angrenzenden Transportebenen (TEA +TEB, TEA+TEC, TEA+TED) von zumindest zwei Planarmotoren (2A+2B, 2A+2C, 2A+ 2D) eindimensional bewegbar ist, wobei die zumindest eine mehrfach wirkende Transporteinheit (3B, 3C) von der Transportebene (TEB) des zweiten Planarmotors (2B) über die Transportebene (TEA) des ersten Planarmotors (2A) in die Transportebene (TEC, TED) des zumindest einen weiteren Planarmotors (2C, 2D) bewegbar ist.

2. Transporteinrichtung (1) nach Anspruch 1, **dadurch gekennzeichnet, dass** als mehrfach wirkende Transporteinheit (3B, 3C) eine doppelt wirkende Transporteinheit (3B) vorgesehen ist, an der ein Grundkörper (9) mit zwei Schenkeln (9A, 9B) vorgesehen ist, die in einem Winkel zueinander angeordnet sind, der dem Angrenzungswinkel (α) zwischen zwei angrenzenden Transportebenen (TEA, TEB) entspricht, wobei an einem Schenkel (9A) die ersten Antriebsmagnete (4) angeordnet sind und am anderen Schenkel (9B) die zweiten Antriebsmagnete (4) angeordnet sind.

3. Transporteinrichtung (1) nach Anspruch 1, **dadurch gekennzeichnet, dass** die mehrfach wirkende Transporteinheit (3B) in zumindest zwei einfach wirkende Transporteinheiten (3Ax, 3Ay) entkoppelbar ist, wobei an den zumindest zwei einfach wirkenden Transporteinheiten (3Ax, 3Ay) jeweils zumindest eine Kopplungsvorrichtung (11) vorgesehen ist, um die Transporteinheiten (3Ax, 3Ay) lösbar miteinander zu koppeln, um die mehrfach wirkende Transporteinheit (3B) auszubilden.

4. Transporteinrichtung (1) nach einem der Ansprüche 1 bis 3, **dadurch gekennzeichnet, dass** je Planarmotor (2A-2E) zumindest eine Planarmotor-Steuerungseinheit (5A-5E) zur Steuerung der Antriebsspulen (6) des jeweiligen Planarmotors (2A-2E) vorgesehen ist, wobei die Planarmotor-Steuerungseinheiten (5A-5E) der zumindest zwei Planarmotoren (2A-2E) verbunden sind, um Steuerungsinformationen zur Steuerung von Transporteinheiten (3) des jeweiligen Planarmotors (2A-2E) auszutauschen und/oder dass die Planarmotor-Steuerungseinheiten (5A-5E) mit einer übergeordneten Transporteinrichtungs-Steuerungseinheit (7) verbunden oder in diese integriert sind.

5. Transporteinrichtung (1) nach einem der Ansprüche 1 bis 4, **dadurch gekennzeichnet, dass** zumindest ein Planarmotor (2A) aus einer Mehrzahl von aneinander angrenzenden Transportsegmenten (TSi) aufgebaut ist, die zusammen die Transportebene (TEA) des Planarmotors (2A) ausbilden, wobei an jedem Transportsegment (TSi) Antriebsspulen (6) vorgesehen sind.

6. Transporteinrichtung (1) nach einem der Ansprüche 1 bis 5, **dadurch gekennzeichnet, dass** in der Transporteinrichtung (1) zumindest zwei Planarmotoren (2A, 2E) mit einander zugewandten Transportebenen (TEA, TEE) vorgesehen sind, wobei in der Transportebene (TEA) eines der Planarmotoren (2A) zumindest eine Transporteinheit (3A3) vorgesehen ist, die mit zumindest einer, in der Transportebene (TEE) des zumindest einen anderen Planarmotors (2E) vorgesehenen Transporteinheit (3A4) mittels einer Verbindungseinheit (15) verbunden ist.

7. Transporteinrichtung (1) nach Anspruch 6, **dadurch gekennzeichnet, dass** zwischen den einander zugewandten Transportebenen (TEA, TEE) ein Anordnungswinkel (γ) vorgesehen ist, der maximal 45° beträgt, wobei der Anordnungswinkel (γ) vorzugsweise 0° beträgt, indem die Transportebenen (TEA, TEE) gegenüberliegend und parallel zueinander angeordnet sind.

8. Transporteinrichtung (1) nach Anspruch 6 oder 7, **dadurch gekennzeichnet, dass** die Verbindungseinheit (15) verstellbar ist, um eine Verbindungseinheitslänge während der Bewegung der zumindest zwei Transporteinheiten an einen veränderlichen Abstand zwischen den zumindest zwei Transporteinheiten (3A3, 3A4) anzupassen.

9. Verfahren zum Betreiben einer Transporteinrichtung (1) mit zumindest zwei Planarmotoren (2A, 2B) mit aneinander angrenzenden und in einem Angrenzungswinkel (α) von 90° relativ zueinander geneigten Transportebenen (TEA, TEB), wobei an den Planarmotoren (2A, 2B) vorgesehene Antriebsspulen (6) von zumindest einer Planarmotor-Steuerungseinheit (5A, 5B) angesteuert werden, wobei an der Transporteinrichtung (1) zumindest eine mehrfach wirkende Transporteinheit (3B, 3C) vorgesehen wird, wobei an der mehrfach wirkenden Transporteinheit (3B, 3C) zumindest erste Antriebsmagnete (4) vorgesehen werden, um mit den Antriebsspulen (6) eines ersten Planarmotors (2A) elektromagnetisch zusammenzuwirken und zumindest zweite Antriebsmagnete (4) vorgesehen werden, um mit den Antriebsspulen (6) eines zweiten Planarmotors (2B) elektromagnetisch zusammenzuwirken, **dadurch gekennzeichnet, dass** in der Transporteinrichtung (1) zumindest ein weiterer Planarmotor (2C, 2D) vorgesehen wird, der eine Transportebene (TEC, TED) ausbildet, die direkt an die Transportebene (TEA) des ersten Planarmotors (2A) angrenzt und normal darauf steht, wobei am zumindest einen weiteren Planarmotor (2C, 2D) vorgesehene Antriebsspulen (6) von einer Planarmotor-Steuerungseinheit (5C, 5D) ansteuerbar sind, und dass die zumindest eine mehrfach wirkende Transporteinheit (3B, 3C) in der Transportebene (TEA, TEB, TEC, TED) eines der Planarmotoren (2A, 2B, 2C, 2D) zweidimensional bewegt wird oder zugleich in den angrenzenden Transportebenen (TEA+TEB, TEA+TEC, TEA+TED) von zumindest zwei Planarmotoren (2A+2B, 2A+2C, 2A+2D) eindimensional bewegt wird, indem die Antriebsspulen (6) zumindest eines der Planarmotoren (2A, 2B, 2C, 2D) von der entsprechenden Planarmotor-Steuerungseinheit (5A, 5B, 5C, 5D) angesteuert werden, um mit den ersten oder zweiten Antriebsmagneten (4) der mehrfach wirkenden Transporteinheit (3B, 3C) zur Erzeugung einer Vortriebskraft zusammenzuwirken.

10. Verfahren nach Anspruch 9, **dadurch gekennzeichnet, dass** die mehrfach wirkende Transporteinheit (3B, 3C) im Bereich der angrenzenden Transportebenen (TEA+TEB, TEA+TEC, TEA+TED) von zwei Planarmotoren (2A+2B, 2A+2C, 2A+2D) in zumindest zwei einfach wirkende Transporteinheiten (3Ax, 3Ay) entkoppelt wird, wobei die zumindest zwei einfach wirkenden Transporteinheiten (3Ax, 3Ay) nach der Entkopplung in jeweils einer der angrenzenden Transportebenen (TEA, TEB; TEA, TEC; TEA,TED) bewegt werden, indem die Antriebsspulen (6) des Planarmotors (2A, 2B, 2C, 2D) der jeweiligen Transportebene (TEA, TEB, TEC, TED) von der jeweiligen Planarmotor-Steuerungseinheit (5A, 5B, 5C, 5D) angesteuert werden, um mit den Antriebsmagneten (4) der jeweiligen einfach wirkenden Transporteinheit (3Ax, 3Ay) zur Erzeugung einer Antriebskraft zusammenzuwirken.

11. Verfahren nach Anspruch 9, **dadurch gekennzeichnet, dass** die zumindest eine mehrfach wirkende Transporteinheit (3B, 3C) von der Transportebene (TEB) des zweiten Planarmotors (2B) in die Transportebene (TEA) des ersten Planarmotors (2A) bewegt wird und von der Transportebene (TEA) des ersten Planarmotors (2A) in die Transportebene (TEC, TED) des zumindest einen weiteren Planarmotors (2C, 2D) bewegt wird oder umgekehrt.

## Claims

1. A transport device (1) comprising at least two planar motors (2A, 2B), each of which forms a transport plane (TEA, TEB) in which at least one transport unit (3) can be moved two-dimensionally, wherein the transport planes (TEA, TEB) of the at least two planar motors (2A, 2B) are adjacent to one another and are inclined with respect to one another at a contact angle (α) which is 90°, with drive coils (6) being provided on each planar motor (2A, 2B) in order to interact electromagnetically with drive magnets (4) of a transport unit (3) in order to move the transport unit (3) in the relevant transport plane (TEA, TEB), wherein at least one multiple-action transport unit (3B, 3C) is provided on the transport device (1), wherein on the multiple-action transport unit (3B, 3C) at least first drive magnets (4) are provided in order to interact electromagnetically with the drive coils (6) of a first planar motor (2A), and at least second drive magnets (4) are provided in order to interact electromagnetically with the drive coils (6) of a second planar motor (2B), **characterized in that** in the transport device (1) at least one further planar motor (2C, 2D) is provided which forms a transport plane (TEC, TED) which is directly adjacent to the transport plane (TEA) of the first planar motor (2A) and which is normal with respect thereto, wherein drive coils (6) are provided on the at least one further planar motor (2C, 2D) in order to interact electromagnetically with drive magnets (4) of a drive unit (3, 3B, 3C) in order to move the transport unit (3, 3B, 3C) in the relevant transport plane (TEC, TED), **and that** the at least one multiple-action transport unit (3B, 3C) can be moved two-dimensionally in the transport plane (TEA, TEB, TEC, TED) of one of the planar motors (2A, 2B, 2C, 2D) or can be moved one-dimensionally in the adjacent transport planes (TEA+TEB, TEA+TEC, TEA+TED) of at least two planar motors (2A+2B, 2A+2C, 2A+2D) at the same time, wherein the at least one multiple-action transport unit (3B, 3C) can be moved from the transport plane (TEB) of the second planar motor (2B) via the transport plane (TEA) of the first planar motor (2A) into the transport plane (TEC, TED) of the at least one further planar motor (2C, 2D).

2. The transport device (1) according to claim 1, **characterized in that** a double-action transport unit (3B) is provided as a multiple-action transport unit (3B, 3C), on which is provided a base body (9) with two legs (9A, 9B) which are arranged at an angle to one another which corresponds to the contact angle (α) between two adjacent transport planes (TEA, TEB), wherein the first drive magnets (4) are arranged on one leg (9A) and the second drive magnets (4) are arranged on the other leg (9B).

3. The transport device (1) according to claim 1, **characterized in that** the multiple-action transport unit (3B) can be decoupled into at least two single-action transport units (3Ax, 3Ay), wherein at least one coupling device (11) is provided on each of the at least two single-action transport units (3Ax, 3Ay) in order to detachably couple the transport units (3Ax, 3Ay) to one another in order to form the multiple-action transport unit (3B).

4. The transport device (1) according to any of claims 1 to 3, **characterized in that** at least one planar motor control unit (5A-5E) is provided per planar motor (2A-2E) to control the drive coils (6) of the relevant planar motor (2A-2E), wherein the planar motor control units (5A-5E) of the at least two planar motors (2A-2E) are connected to exchange control information for controlling transport units (3) of the relevant planar motor (2A-2E) and/or the planar motor control units (5A-5E) are connected to a higher-level transport device control unit (7) or integrated therein.

5. The transport device (1) according to any of claims 1 to 4, **characterized in that** at least one planar motor (2A) is constructed from a plurality of transport segments (TSi) which are adjacent to one another and together form the transport plane (TEA) of the planar motor (2A), wherein drive coils (6) are provided on each transport segment (TSi).

6. The transport device (1) according to any of claims 1 to 5, **characterized in that** In the transport device (1) at least two planar motors (2A, 2E) with transport planes (TEA, TEE) facing each other are provided, wherein at least one transport unit (3A3) is provided in the transport plane (TEA) of one of the planar motors (2A) and is connected by means of a connecting unit (15) to at least one transport unit (3A4) provided in the transport plane (TEE) of the at least one other planar motor (2E).

7. The transport device (1) according to claim 6, **characterized in that** an arrangement angle (γ) which is a maximum of 45° is provided between the transport planes (TEA, TEE) which face one another, wherein the arrangement angle (γ) is preferably 0°, with the transport planes (TEA, TEE) being arranged opposite and parallel to one another.

8. The transport device (1) according to claim 6 or 7, **characterized in that** the connecting unit (15) is adjustable in order to adapt a connecting unit length during the movement of the at least two transport units to a variable distance between the at least two transport units (3A3, 3A4).

9. A method for operating a transport device (1) comprising at least two planar motors (2A, 2B) with transport planes (TEA, TEB) that are adjacent to one another and are inclined at a contact angle (α) of 90° relative to one another, wherein drive coils (6) provided on the planar motors (2A, 2B) are controlled by at least one planar motor control unit (5A, 5B), wherein at least one multiple-action transport unit (3B, 3C) is provided on the transport device (1), wherein on the multiple-action transport unit (3B, 3C) at least first drive magnets (4) are provided in order to interact electromagnetically with the drive coils (6) of a first planar motor (2A), and at least second drive magnets (4) are provided in order to interact electromagnetically with the drive coils (6) of a second planar motor (2B), **characterized in that** in the transport device (1) at least one further planar motor (2C, 2D) is provided which forms a transport plane (TEC, TED) which is directly adjacent to the transport plane (TEA) of the first planar motor (2A) and is normal with respect thereto, wherein drive coils (6) provided on the at least one further planar motor (2C, 2D) can be controlled by a planar motor control unit (5C, 5D), and that the at least one multiple-action transport unit (3B, 3C) is moved two-dimensionally in the transport plane (TEA, TEB, TEC, TED) of one of the planar motors (2A, 2B, 2C, 2D) or is moved one-dimensionally in the adjacent transport planes (TEA+TEB, TEA+TEC, TEA+TED) of at least two planar motors (2A+2B, 2A+2C, 2A+2D) at the same time, by controlling the drive coils (6) of at least one of the planar motors (2A, 2B, 2C, 2D) by the corresponding planar motor control unit (5A, 5B, 5C, 5D) in order to interact with the first or second drive magnets (4) of the multiple-action transport unit (3B, 3C) to generate a propulsive force.

10. The method according to claim 9, **characterized in that** in the region of the adjacent transport planes (TEA+TEB, TEA+TEC, TEA+TED) of two planar motors (2A+2B, 2A+2C, 2A+2D) the multiple-action transport unit (3B, 3C) is decoupled into at least two single-action transport units (3Ax, 3Ay), wherein after the decoupling the at least two single-action transport units (3Ax, 3Ay) are each moved in one of the adjacent transport planes (TEA, TEB; TEA, TEC; TEA, TED), wherein the drive coils (6) of the planar motor (2A, 2B, 2C, 2D) of the relevant transport plane (TEA, TEB, TEC, TED) are controlled by the relevant planar motor control unit (5A, 5B, 5C, 5D) in order to interact with the drive magnets (4) of the relevant single-action transport unit (3Ax, 3Ay) to generate a driving force.

11. The method according to claim 9, **characterized in that** the at least one multiple-action transport unit (3B, 3C) is moved from the transport plane (TEB) of the second planar motor (2B) into the transport plane (TEA) of the first planar motor (2A) and is moved from the transport plane (TEA) of the first planar motor (2A) into the transport plane (TEC, TED) of the at last one further planar motor (2C, 2D), or vice versa.

## Revendications

1. Système de transport (1) comportant au moins deux moteurs planaires (2A, 2B) formant respectivement un plan de transport (TEA, TEB) dans lequel au moins une unité de transport (3) peut être déplacée de façon bidimensionnelle, dans lequel les plans de transport (TEA, TEB) des au moins deux moteurs planaires (2A, 2B) sont adjacents l'un à l'autre et inclinés l'un par rapport à l'autre selon un angle de délimitation (α) de 90°, dans lequel des bobines d'entraînement (6) sont prévues sur chaque moteur planaire (2A, 2B) pour coopérer de façon électromagnétique avec des aimants d'entraînement (4) d'une unité de transport (3) afin de déplacer l'unité de transport (3) dans le plan de transport (TEA, TEB) respectif, dans lequel au moins une unité de transport (3B, 3C) à actions multiples est prévue sur le système de transport (1), dans lequel, sur l'unité de transport (3B, 3C) à actions multiples, au moins des premiers aimants d'entraînement (4) sont prévus pour coopérer de façon électromagnétique avec les bobines d'entraînement (6) d'un premier moteur planaire (2A) et au moins des seconds aimants d'entraînement (4) sont prévus pour coopérer de façon électromagnétique avec les bobines d'entraînement (6) d'un second moteur planaire (2B), **caractérisé en ce qu'**au moins un moteur planaire supplémentaire (2C, 2D) est prévu dans le système de transport (1), lequel moteur planaire supplémentaire forme un plan de transport (TEC, TED) qui est directement adjacent au plan de transport (TEA) du premier moteur planaire (2A) et se trouve en position normale sur ledit plan de transport, dans lequel des bobines d'entraînement (6) sont prévues sur l'au moins un moteur planaire supplémentaire (2C, 2D) pour coopérer de façon électromagnétique avec des aimants d'entraînement (4) d'une unité de transport (3, 3B, 3C) afin de déplacer l'unité de transport (3, 3B, 3C) dans le plan de transport (TEC, TED) respectif, **et en ce que** l'unité de transport (3B, 3C) à actions multiples peut être déplacée de façon bidimensionnelle dans le plan de transport (TEA, TEB, TEC, TED) de l'un des moteurs planaires (2A, 2B, 2C, 2D) ou peut être déplacée simultanément de façon unidimensionnelle dans les plans de transport (TEA +TEB, TEA+TEC, TEA+TED) adjacents d'au moins deux moteurs planaires (2A+2B, 2A+2C, 2A+2D), dans lequel l'au moins une unité de transport (3B, 3C) à actions multiples peut être déplacée du plan de transport (TEB) du second moteur planaire (2B) vers le plan de transport (TEC, TED) de l'au moins un moteur planaire supplémentaire (2C, 2D) en passant par le plan de transport (TEA) du premier moteur planaire (2A).

2. Système de transport (1) selon la revendication 1, **caractérisé en ce qu'**une unité de transport (3B) à double action est prévue comme unité de transport (3B, 3C) à actions multiples, sur laquelle unité de transport à double action est prévu un corps de base (9) comportant deux branches (9A, 9B), lesquelles branches sont disposées l'une par rapport à l'autre selon un angle correspondant à l'angle de délimitation (α) entre deux plans de transport (TEA, TEB) adjacents, dans lequel les premiers aimants d'entraînement (4) sont disposés sur une branche (9A) et les seconds aimants d'entraînement (4) sont disposés sur l'autre branche (9B).

3. Système de transport (1) selon la revendication 1, **caractérisé en ce que** l'unité de transport (3B) à actions multiples peut être découplée en au moins deux unités de transport (3Ax, 3Ay) à action simple, dans lequel respectivement au moins un dispositif de couplage (11) est prévu sur les au moins deux unités de transport (3Ax, 3Ay) à action simple pour coupler les unités de transport (3Ax, 3Ay) entre elles de manière amovible afin de former l'unité de transport (3B) à actions multiples.

4. Système de transport (1) selon l'une des revendications 1 à 3, **caractérisé en ce que**, pour chaque moteur planaire (2A-2E), au moins une unité de commande de moteur planaire (5A-5E) est prévue pour la commande des bobines d'entraînement (6) du moteur planaire (2A-2E) respectif, dans lequel les unités de commande de moteur planaire (5A-5E) des au moins deux moteurs planaires (2A-2E) sont interconnectées pour échanger des informations de commande pour la commande d'unités de transport (3) du moteur planaire (2A-2E) respectif et/ou **en ce que** les unités de commande de moteur planaire (5A-5E) sont connectées à une unité de commande de système de transport (7) de niveau supérieur ou intégrées à celle-ci.

5. Système de transport (1) selon l'une des revendications 1 à 4, **caractérisé en ce qu'**au moins un moteur planaire (2A) est constitué d'une pluralité de segments de transport (TSi) adjacents qui forment ensemble le plan de transport (TEA) du moteur planaire (2A), dans lequel des bobines d'entraînement (6) sont prévues sur chaque segment de transport (TSi).

6. Système de transport (1) selon l'une des revendications 1 à 5, **caractérisé en ce qu'**au moins deux moteurs planaires (2A, 2E) comportant des plans de transport (TEA, TEE) en vis-à-vis sont prévus dans le système de transport (1), dans lequel au moins une unité de transport (3A3) est prévue dans le plan de transport (TEA) de l'un des moteurs planaires (2A), laquelle unité de transport est connectée, à l'aide d'une unité de connexion (15), à au moins une unité de transport (3A4) prévue dans le plan de transport (TEE) de l'au moins un moteur planaire supplémentaire (2E).

7. Système de transport (1) selon la revendication 6, **caractérisé en ce qu'**un angle de disposition (y) est prévu entre les plans de transport (TEA, TEE) en vis-à-vis, lequel angle de disposition est de 45° au maximum, dans lequel l'angle de disposition (y) est de préférence de 0° grâce au fait que les plans de transport (TEA, TEE) sont disposés de façon opposée et parallèle l'un à l'autre.

8. Système de transport (1) selon la revendication 6 ou 7, **caractérisé en ce que** l'unité de connexion (15) peut être réglée pour ajuster une longueur d'unité de connexion pendant le déplacement des aux moins deux unités de transport à une distance variable entre les au moins deux unités de transport (3A3, 3A4).

9. Procédé permettant de faire fonctionner un système de transport (1) comportant au moins deux moteurs planaires (2A, 2B) comportant des plans de transport (TEA, TEB) adjacents et inclinés l'un par rapport à l'autre selon un angle de disposition (α) de 90°, dans lequel des bobines d'entraînement (6) prévues sur les moteurs planaires (2A, 2B) sont commandées par au moins une unité de commande de moteur planaire (5A, 5B), dans lequel au moins une unité de transport (3B, 3C) à actions multiples est prévue sur le système de transport (1), dans lequel, sur l'unité de transport (3B, 3C) à actions multiples, au moins des premiers aimants d'entraînement (4) sont prévus pour coopérer de façon électromagnétique avec les bobines d'entraînement (6) d'un premier moteur planaire (2A) et au moins des seconds aimants d'entraînement (4) sont prévus pour coopérer de façon électromagnétique avec les bobines d'entraînement (6) d'un second moteur planaire (2B), **caractérisé en ce qu'**au moins un moteur planaire supplémentaire (2C, 2D) est prévu dans le système de transport (1), lequel moteur planaire supplémentaire forme un plan de transport (TEC, TED) qui est directement adjacent au plan de transport (TEA) du premier moteur planaire (2A) et se trouve en position normale sur ledit plan de transport, dans lequel des bobines d'entraînement (6) prévues sur l'au moins un moteur planaire supplémentaire (2C, 2D) peuvent être commandées par une unité de commande de moteur planaire (5C, 5D), **et en ce que** l'au moins une unité de transport (3B, 3C) à actions multiples est déplacée de façon bidimensionnelle dans le plan de transport (TEA, TEB, TEC, TED) de l'un des moteurs planaires (2A, 2B, 2C, 2D) ou est déplacée simultanément de façon unidimensionnelle dans les plans de transport (TEA+TEB, TEA+TEC, TEA+TED) adjacents d'au moins deux moteurs planaires (2A+2B, 2A+2C, 2A+2D) grâce à la commande, par l'unité de commande de moteur planaire (5A, 5B, 5C, 5D) correspondante, des bobines d'entraînement (6) d'au moins l'un des moteurs planaires (2A, 2B, 2C, 2D) afin qu'elles coopèrent avec les premiers ou seconds aimants d'entraînement (4) de l'unité de transport (3B, 3C) à actions multiples pour la génération d'une force de propulsion.

10. Procédé selon la revendication 9, **caractérisé en ce que** l'unité de transport (3B, 3C) à actions multiples est découplée en au moins deux unités de transport (3Ax, 3Ay) à action simple dans la zone des plans de transport (TEA+TEB, TEA+TEC, TEA+TED) adjacents de deux moteurs planaires (2A+2B, 2A+2C, 2A+2D), dans lequel les au moins deux unités de transport (3Ax, 3Ay) à action simple sont déplacées dans respectivement l'un des plans de transport (TEA, TEB ; TEA, TEC ; TEA, TED) adjacents après le découplage grâce à la commande, par l'unité de commande de moteur planaire (5A, 5B, 5C, 5D) respective, des bobines d'entraînement (6) du moteur planaire (2A, 2B, 2C, 2D) du plan de transport (TEA, TEB, TEC, TED) respectif afin qu'elles coopèrent avec les aimants d'entraînement (4) de l'unité d'entraînement (3Ax, 3Ay) à action simple respective pour la génération d'une force d'entraînement.

11. Procédé selon la revendication 9, **caractérisé en ce que** l'au moins une unité de transport (3B, 3C) à actions multiples est déplacée du plan de transport (TEB) du second moteur planaire (2B) vers le plan de transport (TEA) du premier moteur planaire (2A) et est déplacée du plan de transport (TEA) du premier moteur planaire (2A) vers le plan de transport (TEC, TED) de l'au moins un moteur planaire supplémentaire (2C, 2D), ou inversement.
